# EUROPÄISCHE PATENTANMELDUNG

(11) **EP 4 199 192 A2**
(43) Veröffentlichungstag der Anmeldung: **21.06.2023**
(21) Anmeldenummer: 22209353.6
(22) Anmeldetag: 24.11.2022
(51) Int. Cl.: H01M 10/6555, H01M 10/6556

(54) **KÜHLPLATTE EINES BATTERIEMODULS EINER TRAKTIONSBATTERIE EINES KRAFTFAHRZEUGS, VERFAHREN ZUM HERSTELLEN DESSELBEN UND BATTERIEMODUL**

(30) Priorität: 16.12.2021 DE 102021133513
(71) Anmelder: Rimac Automobiles Ltd., 10431 Sveta Nedelja (HR); Dr. Ing. h.c. F. Porsche Aktiengesellschaft, 70435 Stuttgart (DE)
(72) Erfinder: Renz, Fadi, 70806 Kornwestheim (DE); Patiniotis, Stavros, 10000 Zaggreb (HR); Vinkovi , Inge, 10430 Samobor (HR)
(74) Vertreter: Sturm, Christoph

(57) **Zusammenfassung**

Kühlplatte (14) eines Batteriemoduls einer Traktionsbatterie eines Kraftfahrzeugs zur Kühlung von Batteriezellen des Batteriemoduls, mit einem ersten Plattenkörper (14a) und einem mit dem ersten Plattenkörper (14a) verbundenen zweiten Plattenkörper, mit einem von dem ersten Plattenkörper (14a) und dem zweiten Plattenkörper an einer ersten Seite (16) der Kühlplatte gebildeten Kühlmittelzulauf (18), mit einem von dem ersten Plattenkörper (14a) und dem zweiten Plattenkörper an einer zweiten Seite (17) der Kühlplatte gebildeten Kühlmittelablauf (19), mit von dem ersten Plattenkörper (14a) und dem zweiten Plattenkörper (14b) gebildeten Kühlmittelkanälen (20, 21, 22), wobei sich ein erster Kühlmittelkanal (20), der mit dem Kühlmittelzulauf (18) gekoppelt ist, ausgehend von der ersten Seite (16) in Richtung auf die zweite Seite (17) erstreckt, wobei sich ein zweiter Kühlmittelkanal (21), der mit dem ersten Kühlmittelkanal (20) gekoppelt ist, ausgehend von der zweiten Seite (17) in Richtung auf die erste Seite (16) erstreckt, und wobei sich ein dritter Kühlmittelkanal (22), der mit dem zweiten Kühlmittelkanal (21) und dem Kühlmittelablauf (19) gekoppelt ist, ausgehend von der ersten Seite (16) in Richtung auf die zweite Seite (17) erstreckt.

## Beschreibung

Die Erfindung betrifft eine Kühlplatte eines Batteriemoduls einer Traktionsbatterie eines Kraftfahrzeugs. Ferner betrifft die Erfindung ein Verfahren zum Herstellen einer solchen Kühlplatte und ein Batteriemodul.

In Kraftfahrzeugen, wie zum Beispiel in Hybridfahrzeugen oder auch Elektrofahrzeugen, sind Traktionsbatterien verbaut, die der Speicherung elektrischer Energie dienen, um dieselbe einer elektrischen Maschine bereitzustellen. Traktionsbatterien verfügen über mehrere Batteriemodule, die untereinander elektrisch verschaltet sind. Jedes Batteriemodul verfügt über mehrere Batteriezellen, die auch untereinander elektrisch verschaltet sind. Im Betrieb unterliegen die Batteriezellen, zum Beispiel infolge von chemischen Reaktionen innerhalb der Batteriezellen, einer Erwärmung. Um eine Beschädigung der Batteriemodule und damit der Traktionsbatterie infolge von einer Überhitzung der Batteriezellen zu vermeiden, muss durch Kühlung der Batteriezellen Wärme von der Traktionsbatterie abgeführt werden. Es ist bereits bekannt, die Batteriezellen einer Traktionsbatterie zu kühlen. Hierzu verfügt ein Batteriemodul einer Traktionsbatterie einer Vorrichtung zur Kühlung der Batteriezellen.

DE 20 2012 006 560 U1 offenbart eine Wasserkühlplatte für einen Batteriesatz. Die Wasserkühlplatte verfügt über eine erste Platte, eine zweite Platte und eine sandwichartig zwischen der ersten Platte und der zweiten Platte angeordnete Kanalstruktur. Ferner verfügt die Wasserkühlplatte über einen separaten Verbinder, der einen Wasserzulauf und einen Wasserablauf ausbildet. Die beiden Platten sowie die Kanalstruktur sind durch Stanzen ausgebildet, wobei diese Baugruppen durch Schweißen miteinander verbunden sind.

CN 207 967 246 U offenbart eine Kühlvorrichtung für eine Kraftfahrzeugbatterie. Die Kühlvorrichtung ist aus Platten zusammengesetzt, wobei an einer oberen Platte ein separater Zulauf und ein separater Ablauf für Kühlmittel ausgebildet ist. Die Kühlplatte dient dabei der Kühlung mehrerer Batteriemodule.

Aus DE 11 215 000 600 T5 und CN 207 250 677 U ist weiterer Stand der Technik bekannt.

Es besteht Bedarf an einer Kühlplatte eines Batteriemoduls einer Traktionsbatterie zur Kühlung mehrerer Batteriezellen des Batteriemoduls, die über einen einfachen Aufbau verfügt und einfach hergestellt werden kann. Ferner besteht Bedarf an einem Batteriemodul mit einer solchen Kühlplatte und einem Verfahren zum Herstellen der Kühlplatte.

Aufgabe der Erfindung ist es, eine Kühlplatte eines Batteriemoduls einer Traktionsbatterie eines Kraftfahrzeugs, ein Verfahren zum Herstellen einer solchen Kühlplatte einer Traktionsbatterie und ein Batteriemodul mit solchen Kühlplatten zu schaffen.

Diese Aufgabe wird durch eine Kühlplatte eines Batteriemoduls einer Traktionsbatterie eines Kraftfahrzeugs nach Anspruch 1.

Die erfindungsgemäße Kühlplatte weist einen ersten Plattenkörper und einen mit dem ersten Plattenkörper verbundenen zweiten Plattenkörper auf. Die erfindungsgemäße Kühlplatte weist einen von dem ersten Plattenkörper und dem zweiten Plattenkörper an einer ersten Seite der Kühlplatte definierten oder gebildeten Kühlmittelzulauf auf. Die erfindungsgemäße Kühlplatte weist ferner einen von dem ersten Plattenkörper und dem zweiten Plattenkörper an einer zweiten Seite der Kühlplatte definierten oder gebildeten Kühlmittelablauf auf. Die erfindungsgemäße Kühlplatte weist ferner von dem ersten Plattenkörper und dem zweiten Plattenkörper definierte oder gebildete Kühlmittelkanäle auf, wobei sich ein erster Kühlmittelkanal, der mit dem Kühlmittelzulauf gekoppelt ist, ausgehend von der ersten Seite in Richtung auf die zweite Seite erstreckt, wobei sich ein zweiter Kühlmittelkanal, der mit dem ersten Kühlmittelkanal gekoppelt ist, ausgehend von der zweiten Seite in Richtung auf die erste Seite erstreckt, und wobei sich ein dritter Kühlmittelkanal, der mit dem zweiten Kühlmittelkanal und dem Kühlmittelablauf gekoppelt ist, ausgehend von der ersten Seite in Richtung auf die zweite Seite erstreckt.

Die erfindungsgemäße Kühlplatte ist aus dem ersten Plattenkörper und dem zweiten Plattenkörper zusammengesetzt. Die beiden Plattenkörper definieren oder bilden sowohl den Kühlmittelzulauf als auch den Kühlmittelablauf sowie die sich zwischen dem Kühlmittelzulauf und dem Kühlmittelablauf erstreckenden Kühlmittelkanäle. Die erfindungsgemäße Kühlplatte ist demnach von lediglich zwei Baugruppen gebildet, nämlich von den beiden Plattenkörpern. Die Kühlplatte verfügt aber über einen einfachen Aufbau und kann einfach hergestellt werden.

Vorzugsweise sind der Kühlmittelzulauf, die Kühlmittelkanäle und der Kühlmittelablauf von aneinander anliegenden und miteinander verbundenen Abschnitten der Plattenkörper abschnittsweise begrenzt. Die aneinander anliegenden und miteinander verbundenen Abschnitte der Plattenkörper sind von Erhebungen der Plattenkörper gebildet, wobei sich zwischen den Erhebungen der Plattenkörper Vertiefungen der Plattenkörper erstrecken, die voneinander beabstandet sind und den Kühlmittelzulauf, die Kühlmittelkanäle und den Kühlmittelablauf einschließen. Dies erlaubt eine besonders einfache Herstellung der Kühlplatte.

Vorzugsweise sind der Kühlmittelzulauf, die Kühlmittelkanäle und der Kühlmittelablauf integrale Bestandteile der Plattenkörper. Die Anzahl der Baugruppen der Kühlplatte reduziert sich auf lediglich zwei, wodurch die Kühlplatte besonders einfach hergestellt werden kann.

Vorzugsweise sind die Plattenkörper aus gestanzten Metallbelchen gebildet, die miteinander verlötet sind. Dies ist besonders bevorzugt, um die erfindungsgemäße Kühlplatte einfach herzustellen.

Vorzugsweise grenzen in einem Übergangsbereich zwischen dem Kühlmittelzulauf und dem ersten Kühlmittelkanal und/oder in einem Übergangsbereich zwischen dem dritten Kühlmittelkanal und dem Kühlmittelablauf runde oder ovale Abschnitte der Plattenkörper aneinander an und sind miteinander verbunden. Die runden oder ovalen Abschnitte begünstigen einerseits eine vorteilhafte Strömungsführung im jeweiligen Übergangsbereich, andererseits verleihen dieselben der Kühlplatte selbst bei hohen Strömungsdrücken eine hohe Stabilität.

Vorzugsweise grenzen in einem Übergangsbereich zwischen dem ersten Kühlmittelkanal und dem zweiten Kühlmittelkanal und/oder in einem Übergangsbereich zwischen dem zweiten Kühlmittelkanal und dem dritten Kühlmittelkanal gebogene oder gekrümmte, insbesondere sichelförmige, Abschnitte der Plattenkörper aneinander an und sind miteinander verbunden. Auch die gebogenen oder gekrümmten, insbesondere sichelförmigen, Abschnitte begünstigen die Strömungsführung des Kühlfluids und geben der Kühlplatte selbst bei hohen Strömungsdrücken eine hohe Stabilität.

Das erfindungsgemäße Batteriemodul ist in Anspruch 9 definiert. Das erfindungsgemäße Verfahren zum Herstellen einer Kühlplatte eines Batteriemoduls einer Traktionsbatterie ist in Anspruch 10 definiert.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: eine perspektivische Ansicht einer Vorrichtung zur Kühlung von Batteriezellen eines Batteriemoduls einer Traktionsbatterie eines Kraftfahrzeugs;
- Fig. 2: eine Seitenansicht einer der Kühlplatten der Vorrichtung der Fig. 1,

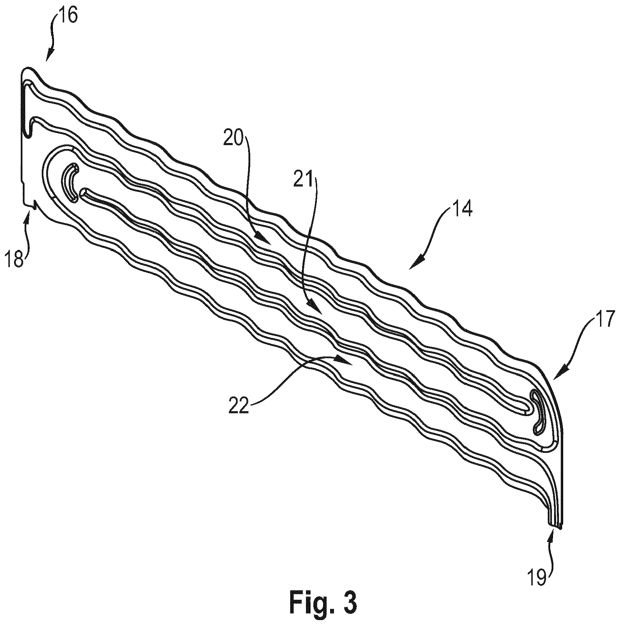

- Fig. 3: eine perspektivische Ansicht der Kühlplatte der Fig. 2,
- Fig. 4: eine Explosionsdarstellung der Fig. 3,

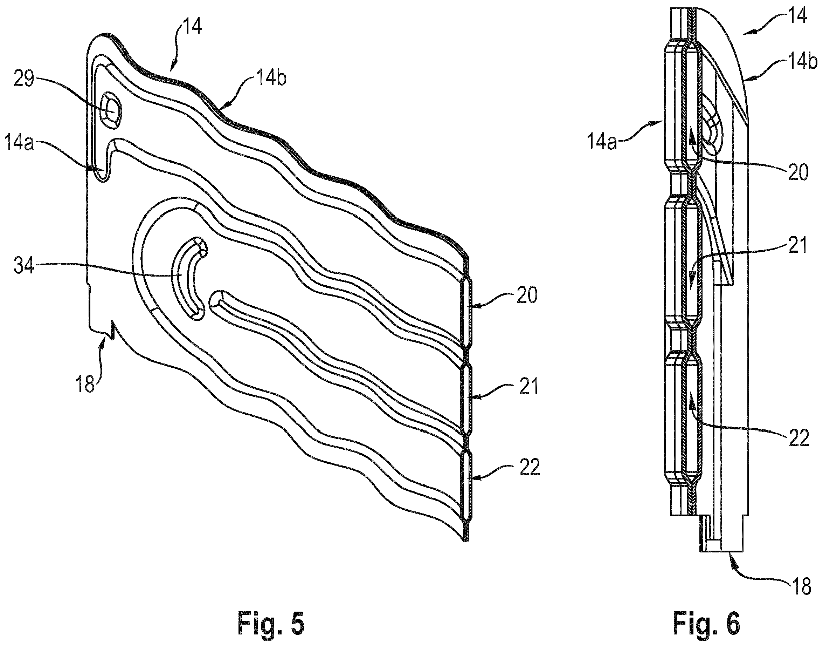

- Fig. 5: einen ersten Querschnitt durch Fig. 3,
- Fig. 6: den Querschnitt der Fig. 5 in einer anderen perspektivischen Ansicht,

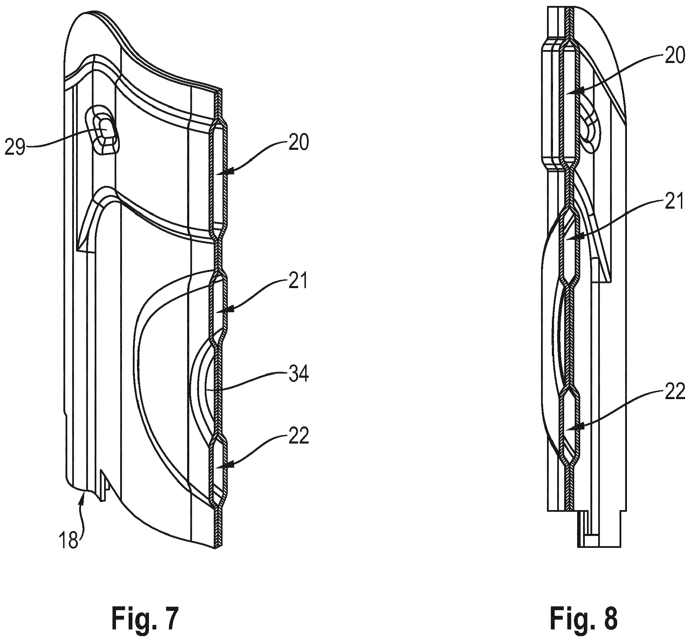

- Fig. 7: einen zweiten Querschnitt durch Fig. 3,
- Fig. 8: den Querschnitt der Fig. 7 in einer anderen perspektivischen Ansicht,

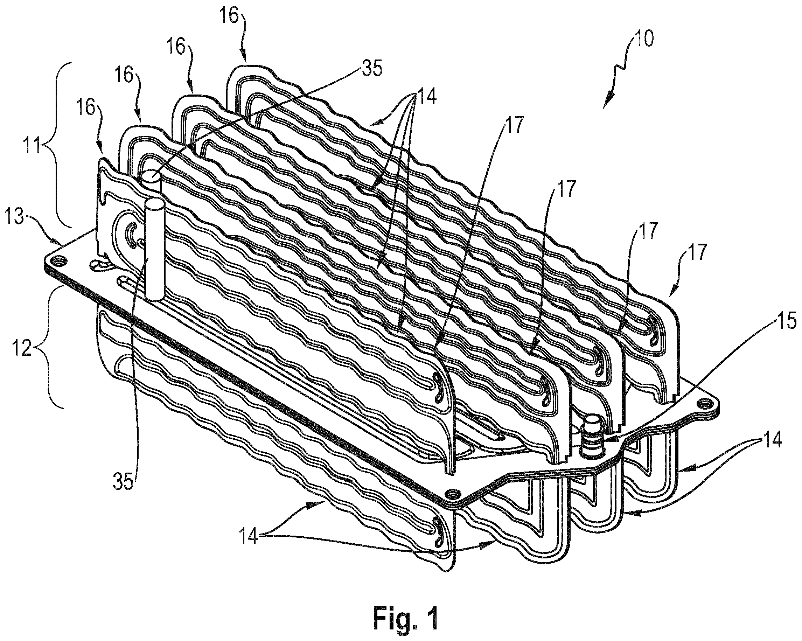

Fig. 1 zeigt eine perspektivische Ansicht eines bevorzugten Ausführungsbeispiels einer Vorrichtung 10 zur Kühlung von Batteriezellen 35 eines Batteriemoduls einer Traktionsbatterie eines Kraftfahrzeugs. In Fig. 1 sind lediglich zwei Batteriezellen 35 gezeigt.

Die Anordnung der Fig. 1 kann in einem Modulgehäuse (nicht gezeigt) des Batteriemoduls aufgenommen sein.

Die Batteriezellen 35 sind in zwei übereinander angeordneten Batteriezellenebenen 11, 12 angeordnet. So sind in einer ersten bzw. oberen Batteriezellenebene 11 und in einer zweite bzw. unteren Batteriezellenebene 12 sind jeweils eine Vielzahl von Batteriezellen 35 angeordnet. Wie bereits ausgeführt, sind in Fig. 1 lediglich zwei Batteriezellen 35 gezeigt, die beide in der oberen Batteriezellenebene 11 angeordnet sind.

Die Vorrichtung 10 zur Kühlung der Batteriezellen 35 verfügt über eine zwischen der ersten Batteriezellenebene 11 und der zweiten Batteriezellenebene 12 angeordnete erste Kühlplatte 13, die über ihre Außenseiten im thermischen Kontakt mit den Batteriezellen 35 der ersten Batteriezellenebene 11 und im thermischen Kontakt mit den Batteriezellen 35 der zweiten Batteriezellenebene 12 steht.

So steht in Fig. 1 die erste Kühlplatte 13 über eine erste Außenseite mit einer Unterseite der Batteriezellen 35 der ersten Batteriezellenebene 11 und über eine zweite Außenseite mit einer Oberseite der Batteriezellen 35 der zweiten Batteriezellenebene 12 in thermischem Kontakt.

In der ersten Batteriezellenebene 11 sind an der Oberseite der Batteriezellen 35 und in der zweiten Batteriezellenebene 12 an der Unterseite der Batteriezellen 35 elektrische Kontakte (nicht gezeigt) der Batteriezellen 35 ausgebildet. Diejenigen Seiten der jeweiligen Batteriezelle 35, an welchen elektrischen Kontakte (nicht gezeigt) der Batteriezellen ausgebildet sind, sind also von der ersten Kühlplatte 13 abgewandt.

Die Batteriezellen 35 des Batteriemoduls liegen demnach mit den von den elektrischen Kontakten der Batteriezellen 35 abgewandten Seiten an der ersten Kühlplatte 13 der Kühlvorrichtung 10 an, und zwar an den Außenseiten der ersten Kühlplatte 13.

Die erste Kühlplatte 13 ist von einem Kühlfluid durchströmt. Die erste Kühlplatte 13 kann über einen sandwichartigen Aufbau aus vorzugsweise drei Plattenkörpern verfügen. Es ist möglich, dass die erste Kühlplatte 13 auch von lediglich zwei Plattenkörpern gebildet ist. Auch kann die erste Kühlplatte 13 eine monolithische Baugruppe sein, die z.B. durch 3D Drucken hergestellt ist. Dann, wenn die erste Kühlplatte 13 aus zwei Plattenkörpern gebildet ist, bilden diese Plattenkörper die Außenseiten der ersten Kühlplatte 13, über welche die erste Kühlplatte 12 mit den Batteriezellen der beiden Batteriezellenebenen im thermischen Kontakt steht. Diese beiden Plattenkörpern definieren dann die Strömungskanäle der ersten Kühlplatte 13 für das Kühlmedium.

Die Vorrichtung 10 zur Kühlung der Batteriezellen 35 verfügt zusätzlich zu der ersten Kühlplatte 13 über mehrere zweite Kühlplatten 14, die im Sinne der Erfindung ausgebildet sind. So sind, wie Fig. 1 entnommen werden kann, welche die Vorrichtung 10 zur Kühlung der Batterie zeigt, in jeder Batteriezellenebene 11, 12 mehrere, im gezeigten Ausführungsbeispiel vier, zweite Kühlplatten 14 angeordnet. Die zweiten Kühlplatten 14 sind ebenso wie die erste Kühlplatte 13 von dem Kühlfluid durchströmt, wobei jede der zweiten Kühlplatten 14 im thermischen Kontakt mit mehreren Batteriezellen 35 der jeweiligen Batteriezellenebene 11, 12 steht, und zwar derart, dass jede der zweiten Kühlplatten 14 auf jeder Seite derselben mit jeweils einer Reihe aus Batteriezellen 35 im thermischen Kontakt steht. Die beiden in Fig. 1 gezeigten Batteriezellen 35 stehen mit der vorderen zweiten Kühlplatte 14 der oberen Batteriezellenebene 11 in thermischem Kontakt.

Die Vorrichtung 10 verfügt ferner über einen Kühlfluideinlass (nicht sichtbar) bzw. Kühlfluidzulauf und einen Kühlfluidauslass 15 bzw. Kühlfluidablauf. In Fig. 1 ist lediglich der Kühlfluidauslass 15 sichtbar. Über den Kühlfluideinlass (nicht sichtbar) strömt Kühlfluid in die erste Kühlplatte 13, nämlich die Strömungskanäle der ersten Kühlplatte 13 ein. Ein erster Teil dieses über den Kühlfluideinlass in die erste Kühlplatte 13 einströmenden Kühlfluids strömt ausschließlich durch die erste Kühlplatte 13 hindurch in Richtung auf die gegenüberliegende zweite Seite der ersten Kühlplatte 13, um an dieser gegenüberliegenden zweiten Seite der ersten Kühlplatte 13 über den Kühlfluidauslass 15 aus der ersten Kühlplatte 13 herauszuströmen.

Ein zweiter Teil des über den Kühlfluideinlass (nicht sichtbar) in die erste Kühlplatte 13 einströmenden Kühlfluids strömt an der ersten Seite der ersten Kühlplatte 13 von der ersten Kühlplatte 13 in die zweiten Kühlplatten 14, durchströmt die zweiten Kühlplatten 14 und strömt an der zweiten, gegenüberliegenden Seite der ersten Kühlplatte 13 von den zweiten Kühlplatten 14 zurück in die erste Kühlplatte 13, um dann wiederum an der zweiten Seite der ersten Kühlplatte 13 über den Kühlfluidauslass 15 aus der ersten Kühlplatte 13 und damit aus der Vorrichtung 10 zur Kühlung der Batteriezellen 35 herauszuströmen.

Die zweiten Kühlplatten 14 verfügen in Längsrichtung, also zwischen einer ersten Seite 16 der jeweiligen zweiten Kühlplatte 14 und einer gegenüberliegenden zweiten Seite 17 der jeweiligen zweiten Kühlplatte 14, über einen gewellten Verlauf bzw. einen Wellenkontur. Dieser gewellte Verlauf bzw. die Wellenkontur der zweiten Kühlplatten 14 ist an die Kontur der zu kühlenden Batteriezellen 35, die sich Reihen entlang der zweiten Kühlplatten 14 erstrecken, angepasst.

An den sich gegenüberliegenden Seiten der zweiten Kühlplatten 14 verfügen dieselben über einen Kühlmittelzulauf 18 und einen Kühlmittelablauf 19, nämlich an einer ersten Seite 16 über einen Kühlmittelzulauf 18 und an einer gegenüberliegenden zweiten Seite 17 über einen Kühlmittelablauf 19. Über den jeweiligen Kühlmittelzulauf 18 kann der zweite Teil des in die erste Kühlplatte 13 einströmenden Kühlfluids von der ersten Kühlplatte 13 in die jeweilige zweite Kühlplatte 14 überströmen. Über den jeweiligen Kühlmittelablauf 19 kann das Kühlfluid nach dem Durchströmen der jeweiligen zweiten Kühlplatten 14 aus denselben austreten und zurück in die erste Kühlplatte 13 strömen, um im Anschluss über den Kühlfluidauslass 15 abgeführt zu werden.

Zusätzlich zu dem an der ersten Seite 16 der jeweiligen zweiten Kühlplatte 14 ausgebildeten Kühlmittelzulauf 18 und dem an der gegenüberliegenden zweiten Seite 17 der jeweiligen zweiten Kühlmittelplatte 14 ausgebildeten Kühlmittelablauf 19 verfügt die jeweilige zweite Kühlplatte 14 über sich in Längsrichtung zwischen der ersten Seite 16 und der zweiten Seite 17 erstreckende Kühlkanäle 20, 21, 22.

Ein erster Kühlmittelkanal 20 der jeweiligen zweiten Kühlmittelplatte 14, der mit dem Kühlmittelzulauf 18 gekoppelt ist, erstreckt sich ausgehend von der ersten Seite 16 der jeweiligen zweiten Kühlmittelplatte 14 in Richtung auf die zweite Seite 17 der jeweiligen zweiten Kühlmittelplatte 14.

Ein zweiter Kühlmittelkanal 21 der jeweiligen zweiten Kühlmittelplatte 14, der mit dem ersten Kühlmittelkanal 20 im Bereich der zweiten Seite 17 gekoppelt ist, erstreckt sich ausgehend von der zweiten Seite 17 der jeweiligen zweiten Kühlmittelplatte 14 in Richtung auf die erste Seite 16 der jeweiligen zweiten Kühlmittelplatte 14.

Ein dritter Kühlmittelkanal 22 der jeweiligen zweiten Kühlmittelplatte 14, der im Bereich der ersten Seite 16 der jeweiligen zweiten Kühlmittelplatte 14 mit dem zweiten Kühlmittelkanal 21 gekoppelt ist, erstreckt sich ausgehend von der ersten Seite 16 der jeweiligen zweiten Kühlmittelplatte 14 in Richtung auf die zweite Seite 17 der jeweiligen zweiten Kühlmittelplatte 14 und ist dort mit dem Kühlmittelablauf 19 gekoppelt.

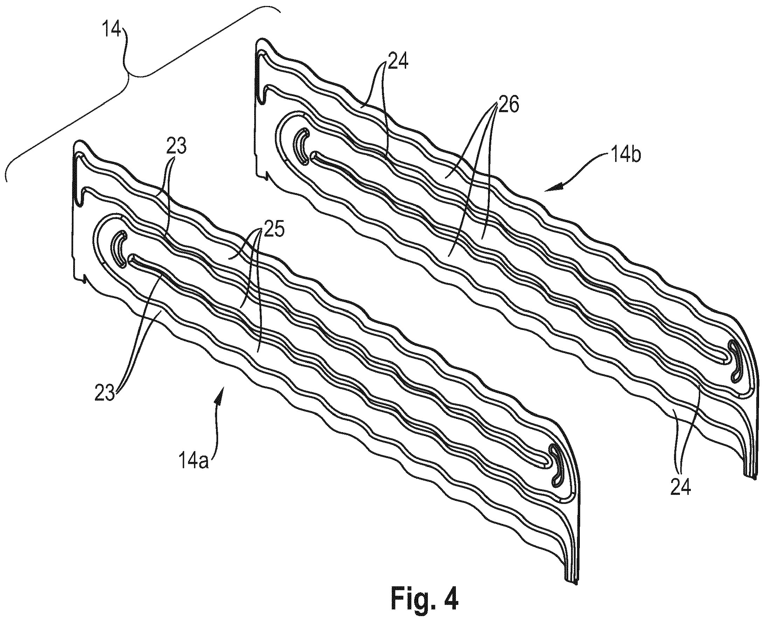

Die jeweilige zweite Kühlplatte 14 ist, wie am besten der Explosionsdarstellung der Fig. 4 entnommen werden kann, aus einem ersten Plattenkörper 14a und einem zweiten Plattenkörper 14b gebildet.

Die beiden Plattenkörper 14a, 14b bilden sowohl den oben erwähnten Kühlmittelzulauf 18 als auch den oben erwähnten Kühlmittelablauf 19 sowie die oben erwähnten Kühlmittelkanäle 20, 21, 22.

Die jeweilige zweite Kühlplatte 14 ist demnach von ausschließlich zwei Baugruppen gebildet, nämlich von den beiden Plattenkörpern 14a, 14b. Die beiden Plattenkörper 14a, 14b definieren und bilden sowohl den Kühlmittelzulauf 18 als auch den Kühlmittelablauf 19 der jeweiligen zweiten Kühlplatte 14, ebenso die sich in Längsrichtung der jeweiligen zweiten Kühlplatte 14 erstreckenden Kühlmittelkanäle 20, 21, 22 der jeweiligen zweiten Kühlplatte 14. Der Kühlmittelzulauf 18, der Kühlmittelablauf 19 und die Kühlmittelkanäle 20, 21, 22 sind dabei integrale Bestandteile der Plattenkörper 14a, 14b der jeweiligen zweiten Kühlplatte 14.

Der Kühlmittelzulauf 18, der Kühlmittelablauf 19 sowie die Kühlmittelkanäle 20, 21 und 22 der jeweiligen zweiten Kühlplatte 14 sind von aneinander anliegenden und miteinander verbundenen Abschnitten der Plattenkörper 14a, 14b abschnittsweise begrenzt. So sind diese aneinander anliegenden und miteinander verbundenen Abschnitte der Plattenkörper 14a, 14b von Erhebungen 23, 24 der Plattenkörper 14a, 14b gebildet. Zwischen diesen Erhebungen 23, 24 der Plattenkörper 14a, 14b erstrecken sich Vertiefungen 25, 26, die nicht aneinander anliegen, sondern vielmehr voneinander beabstandet sind und den Kühlmittelzulauf 18, den Kühlmittelablauf 19 und die Kühlmittelkanäle 20, 21 und 22 einschließen.

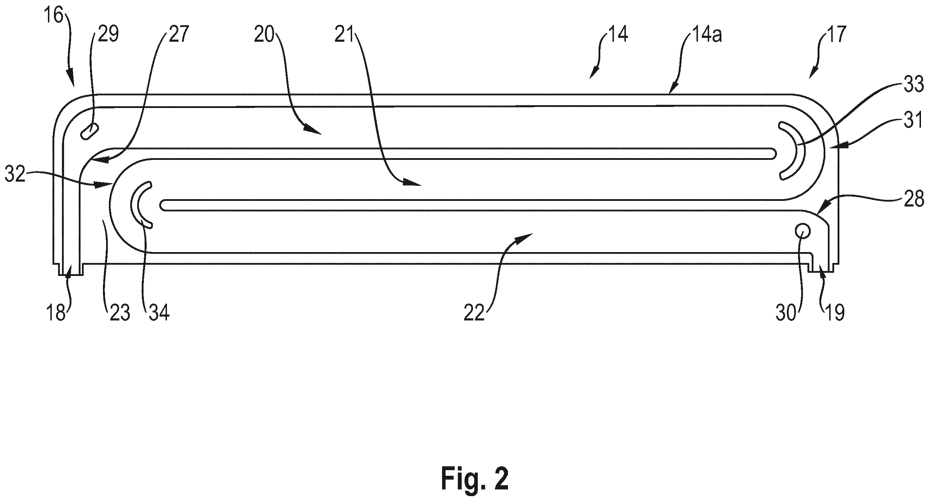

Wie am besten Fig. 2 entnommen werden kann, sind in einem Übergangsbereich 27 zwischen dem Kühlmittelzulauf 18 und dem ersten Kühlmittelkanal 20, der im Bereich der ersten Seite 16 der jeweiligen zweiten Kühlplatte 14 ausgebildet ist, sowie in einem Übergangsbereich 28 zwischen dem dritten Kühlmittelkanal 22 und dem Kühlmittelablauf 19, der im Bereich der zweiten Seite 17 der jeweiligen zweiten Kühlplatte 14 ausgebildet ist, von den Erhebungen 23, 24 der Plattenkörper 14a, 14b gebildete Abschnitte, die aneinander angrenzen, miteinander verbunden. Im Übergangsbereich 27 wird hierdurch ein ovales Element 29 und im Übergangsbereich 28 ein rundes Element 30 ausgebildet. Diese Elemente 29 und 30 erhöhen die Stabilität der jeweiligen zweiten Kühlplatte 14 im jeweiligen Übergangsbereich 27 und 28. Ferner verhindern diese Elemente 29, 30, dass sich bei einem hohen Fluiddruck die beiden Plattenkörper 14a, 14b voneinander entfernen und sich die jeweilige zweite Kühlplatte 14 verformt bzw. aufbläht. Ferner begünstigen diese Elemente 29 und 30 die Strömungsführung des Kühlfluids im jeweiligen Übergangsbereich 27 und 28.

In Fig. 4 ist auch in einem Übergangsbereich 31 zwischen dem ersten Kühlmittelkanal 20 und dem zweiten Kühlmittelkanal 21, der im Bereich der zweiten Seite 17 der jeweiligen zweiten Kühlplatte 14 ausgebildet ist, als auch in einem Übergangsbereich 32 zwischen dem zweiten Kühlmittelkanal 21 und dem dritten Kühlmittelkanal 22, der im Bereich der ersten Seite 16 der jeweiligen zweiten Kühlplatte 14 ausgebildet ist, jeweils ein Element 33, 34 ausgebildet, welches in den Übergangsbereichen 31, 32 die mechanische Stabilität der jeweiligen zweiten Kühlplatte 14 erhöht und die Strömungsführung des Kühlfluids im jeweiligen Übergangsbereich 31, 32 verbessert. In diesen Übergangsbereichen 31, 32 sind diese Elemente 33, 34 von gebogenen oder gekrümmten, insbesondere sichelförmigen, Abschnitten der Plattenkörper 14a, 14b gebildet, die wiederum von den Erhebungen 23, 24 der Plattenkörper 14a, 14b bereitgestellt sind.

Wie bereits ausgeführt, ist die jeweilige zweite Kühlplatte 14 von lediglich zwei Baugruppen gebildet, nämlich von den beiden Plattenkörpern 14a, 14b. Bei den Plattenkörpern 14a, 14b handelt es sich dabei um Körper aus gestanzten Metallblechen, die miteinander verlötet sind.

Die Erfindung betrifft sowohl eine Kühlplatte 14 alleine, als auch ein Batteriemodul, welches mehrere derartige Kühlplatten 14 aufweist. Im gezeigten Ausführungsbeispiel bilden die erfindungsgemäß ausgebildeten Kühlplatten die zweiten Kühlplatten 14 der Vorrichtung 10 zur Kühlung der Batteriezellen 35.

Zur Herstellung einer erfindungsgemäßen Kühlplatte 14 wird mindestens ein Metallblech bereitgestellt, wobei aus dem mindestens einen Metallblech die Plattenkörper 14a, 14b durch Stanzen ausgebildet werden. Hierbei können die Plattenkörper 14a, 14b in die gewellte Form gebracht werden. Anschließend werden die durch Stanzen ausgebildeten Plattenkörper 14a, 14b miteinander verbunden, nämlich durch Löten. Hierbei wird auf die Erhebungen der Plattenkörper 14a, 14b, die nach der Herstellung aneinander anliegen und miteinander verbunden sind, eine Lötpaste aufgebracht. Beim Löten werden die Plattenkörper 14a, 14b im Bereich ihrer aneinander angrenzenden Erhebungen 23 und 24 vollflächig miteinander verbunden, und zwar auch im Bereich der Elemente 29, 30, 33 und 34.

Die erfindungsgemäße Kühlplatte und damit die Vorrichtung zur Kühlung der Batteriezellen eines Batteriemoduls und damit das Batteriemodul verfügt über einen Aufbau und kann einfach hergestellt werden.

## Patentansprüche

1. Kühlplatte (14) eines Batteriemoduls einer Traktionsbatterie eines Kraftfahrzeugs zur Kühlung von Batteriezellen des Batteriemoduls,
mit einem ersten Plattenkörper (14a) und einem mit dem ersten Plattenkörper (14a) verbundenen zweiten Plattenkörper (14b),
mit einem von dem ersten Plattenkörper (14a) und dem zweiten Plattenkörper (14b) an einer ersten Seite (16) der Kühlplatte gebildeten Kühlmittelzulauf (18),
mit einem von dem ersten Plattenkörper (14a) und dem zweiten Plattenkörper (14b) an einer zweiten Seite (17) der Kühlplatte gebildeten Kühlmittelablauf (19),
mit von dem ersten Plattenkörper (14a) und dem zweiten Plattenkörper (14b) gebildeten Kühlmittelkanälen (20, 21, 22),
wobei sich ein erster Kühlmittelkanal (20), der mit dem Kühlmittelzulauf (18) gekoppelt ist, ausgehend von der ersten Seite (16) in Richtung auf die zweite Seite (17) erstreckt,
wobei sich ein zweiter Kühlmittelkanal (21), der mit dem ersten Kühlmittelkanal (20) gekoppelt ist, ausgehend von der zweiten Seite (17) in Richtung auf die erste Seite (16) erstreckt,
wobei sich ein dritter Kühlmittelkanal (22), der mit dem zweiten Kühlmittelkanal (21) und dem Kühlmittelablauf (19) gekoppelt ist, ausgehend von der ersten Seite (16) in Richtung auf die zweite Seite (17) erstreckt.

2. Kühlplatte nach Anspruch 1, **dadurch gekennzeichnet, dass**
der Kühlmittelzulauf (18), die Kühlmittelkanäle (20, 21, 22) und der Kühlmittelablauf (19) von aneinander anliegenden und miteinander verbundenen Abschnitten der Plattenkörper (14a, 14b) abschnittsweise begrenzt sind.

3. Kühlplatte nach Anspruch 2, **dadurch gekennzeichnet, dass**
die aneinander anliegenden und miteinander verbundenen Abschnitte der Plattenkörper (14a, 14b) von Erhebungen (23, 24) der Plattenkörper gebildet sind,
sich zwischen den Erhebungen (23, 24) der Plattenkörper (14a, 14b) Vertiefungen (25, 26) der Plattenkörper erstrecken, die voneinander beabstandet sind und den Kühlmittelzulauf (18), die Kühlmittelkanäle (20, 21, 22) und den Kühlmittelablauf (19) einschließen.

4. Kühlplatte nach einem der Ansprüche 1 bis 3, **dadurch gekennzeichnet, dass**
der Kühlmittelzulauf (18), die Kühlmittelkanäle (20, 21, 22) und der Kühlmittelablauf (19) integrale Bestandteile der Plattenkörper (14a, 14b) sind.

5. Kühlplatte nach einem der Ansprüche 1 bis 4, **dadurch gekennzeichnet, dass**
in einem Übergangsbereich (27) zwischen dem Kühlmittelzulauf (18) und dem ersten Kühlmittelkanal (20) runde oder ovale Abschnitte der Plattenkörper (14a, 14b) aneinander angrenzen und miteinander verbunden sind, und/oder
in einem Übergangsbereich (28) zwischen dem dritten Kühlmittelkanal (22) und dem Kühlmittelablauf (19) runde oder ovale Abschnitte der Plattenkörper (14a, 14b) aneinander angrenzen und miteinander verbunden sind.

6. Kühlplatte nach einem der Ansprüche 1 bis 5, **dadurch gekennzeichnet, dass**
in einem Übergangsbereich (31) zwischen dem ersten Kühlmittelkanal (20) und dem zweiten Kühlmittelkanal (21) gebogene oder gekrümmte, insbesondere sichelförmige, Abschnitte der Plattenkörper (14a, 14b) aneinander angrenzen und miteinander verbunden sind, und/oder
in einem Übergangsbereich (32) zwischen dem zweiten Kühlmittelkanal (21) und dem dritten Kühlmittelkanal (22) gebogene oder gekrümmte, insbesondere sichelförmige, Abschnitte der Plattenkörper (14a, 14b) aneinander angrenzen und miteinander verbunden sind.

7. Kühlplatte nach einem der Ansprüche 1 bis 6, **dadurch gekennzeichnet, dass**
die Plattenkörper (14a, 14b) aus gestanzten Metallbelchen gebildet sind, die miteinander verlötet sind.

8. Kühlplatte nach einem der Ansprüche 1 bis 7, **dadurch gekennzeichnet, dass**
dieselbe der Kühlung mehrerer Batteriezellen des Batteriemoduls der Traktionsbatterie dient,
dieselbe zwischen der ersten Seite (16) und der zweiten Seite (17) einen an die Kontur der zu kühlenden Batteriezellen des Batteriemoduls der Traktionsbatterie angepassten, gewellten Verlauf aufweist.

9. Batteriemodul einer Traktionsbatterie eines Kraftfahrzeugs,
mit mehreren in mindestens zwei übereinander positionierten Batteriezellenebenen (11, 12) angeordneten Batteriezellen (35),
mit einer Vorrichtung (10) zur Kühlung der Batteriezellen (35), die folgende Baugruppen aufweist:
eine zwischen einer ersten Batteriezellenebene (11) und einer zweiten Batteriezellenebene (12) angeordnete erste Kühlplatte (13), die in thermischem Kontakt mit den Batteriezellen der ersten und zweiten Batteriezellenebene (11) steht,
innerhalb der ersten Batteriezellenebene (11) angeordnete zweite Kühlplatten (14) und innerhalb der zweiten Batteriezellenebene (12) angeordnete weitere zweite Kühlplatten (14), die in thermischem Kontakt mit mehreren Batteriezellen der jeweiligen Batteriezellenebene (11, 12) stehen,
wobei zumindest die zweiten Kühlplatten (14) nach einem der Ansprüche 1 bis 8 ausgebildet ist.

10. Verfahren zum Herstellen einer Kühlplatte (14) eines Batteriemoduls einer Traktionsbatterie nach einem der Ansprüche 1 bis 8, mit folgenden Schritten:
Bereitstellen mindestens eines Metallblechs,
Ausbilden der Plattenkörper (14a, 14b) aus dem mindestens einen Metallblech, nämlich durch Stanzen,
Verbinden der Plattenkörper (14a, 14b), nämlich durch Löten.
